# EUROPEAN PATENT APPLICATION

(11) **EP 2 739 103 A1**
(43) Date of publication of application: **04.06.2014**
(21) Application number: 11869800.0
(22) Date of filing: 27.07.2011
(51) Int. Cl.: H04W 72/04, H04W 88/00, H04W 28/00

(54) **METHODS FOR SENDING AND RECEIVING DOWNLINK CONTROL INFORMATION, BASE STATION, AND MOBILE TERMINAL**

(71) Applicant: Fujitsu Limited, Kawasaki-shi, Kanagawa 211-8588 (JP)
(72) Inventor: ZHANG, Yuantao, Beijing 100025 (CN); WANG, Yi, Beijing 100025 (CN); ZHOU, Hua, Beijing 100025 (CN)
(74) Representative: Fenlon, Christine Lesley
(86) International application number: PCT/CN2011/077676
(87) International publication number: WO 2013/013394

(57) **Abstract**

The present invention relates to methods for sending and receiving downlink control information, a base station, and a mobile terminal. The method for sending downlink control information comprises: sending first downlink control information to a mobile terminal, the first downlink control information being a part of downlink control information and comprising resource allocation information; on resource specified by the resource allocation information, sending second downlink control information to the mobile terminal, the second downlink control information being the other part, different from the first downlink control information, of the downlink control information.

## Description

### Technical Field

The present invention relates to the field of communications, and particularly, to a transmission and a reception of downlink control information in the field of communications.

### Background

In a Long Term Evolution (LTE) system, a Physical Downlink Control Channel (PDCCH) is used to transmit control information, including downlink scheduling information (DL-Grant), uplink scheduling information (UL-Grant), power control information, etc. The PDCCHs of all mobile stations in a cell are multiplexed into first several Orthogonal Frequency Division Multiplexing (OFDM) symbols in one subframe. At most 3 OFDM symbols may be used to transmit the PDCCH, and the posterior OFDM symbols are used for the base station to transmit the Physical Downlink Shared Channel (PDSCH) of the mobile station. Herein, in the subframe, a region of at most 3 OFDM symbols for transmitting the PDCCH is also referred to as a control region, and a region of the OFDM symbols for transmitting the PDSCH is also referred to as a data region.

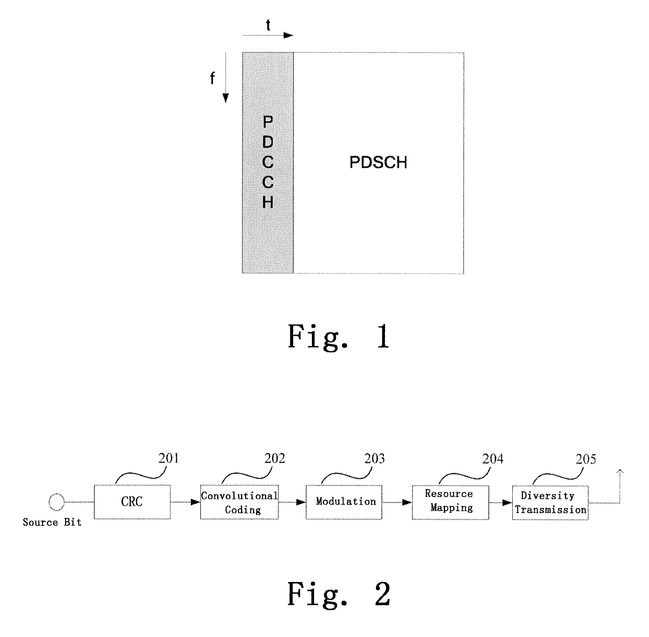

Fig. 1 illustrates a typical subframe structure of an LTE system.

The minimum allocation unit of the PDCCH is a Control Channel Element (CCE). One PDCCH may occupy 1, 2, 4 or 8 CCEs, and each CCE includes 36 Resource Elements (REs) which are distributed on the whole bandwidth in an interleaved manner. When a transmitting end uses a plurality of antennas to perform transmission, the PDCCH is transmitted based on the manner of transmit diversity (TxD), and the diversity mode used is Space-Frequency Block Code (SFBC). The modulation mode of Quadrature Phase Shift Keying (QPSK) is fixedly used for the PDCCH, and the convolutional code is taken as the forward error correction code.

Fig. 2 illustrates a schematic diagram of a processing procedure of a PDCCH transmitting end in the prior art. As illustrated in Fig. 2, firstly in step 201, a Cyclic Redundancy Check (CRC) code of 16 bits is generated according to source information bits of all Downlink Control Information(DCI). Next in step 202, the generated sequence is performed a Tail Biting Convolutional Coding (TBCC). Next in step 203, the coded information bits is performed a QPSK modulation, then in step 204, the generated symbol sequence is mapped to each of the resource elements in the allocated CCE, and finally transmitted through the antennas in step 205.

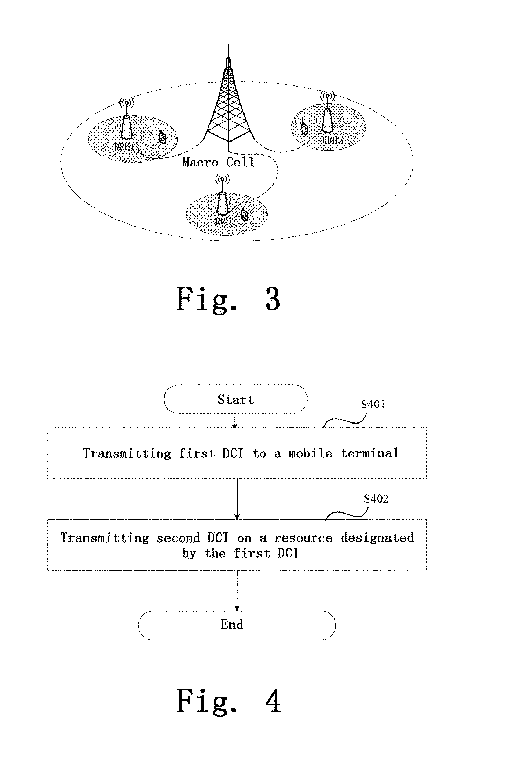

In some scenarios, the capacities of 3 OFDM symbols cannot meet the scheduling requirement for the current mobile station scheduling. For example in an LTE release 11, a plurality of Radio Remove Headers (RRHs) are simultaneously existed in a cell. The RRHs may be deployed at the hot spot or the edge of the cell, so as to provide better services to the mobile station in such region. Fig. 3 illustrates a typical deployment of a cell containing RRHs. Typically, since the transmitting power of the RRH is low and the RRHs are far away from each other, the mobile stations in different RRH coverage ranges can share the same resource. That is to say, comparatively speaking, on the resource of one subframe, since the number of schedulable mobile stations in a cell may be greatly increased, the amount of the scheduling information to be transmitted in the one subframe is increased, and the 3 traditional OFDM symbols may be not enough to accommodate the scheduling information of all the mobile stations. If this problem cannot be solved, the user scheduling will be decreased, thereby reducing the system throughput.

### Summary

In view of the above conditions of the prior art, the present invention is proposed to overcome or relieve one or more shortages caused by the limitations or shortages of the prior art, and provides at least one beneficial selection.

According to an aspect of the present invention, a method for transmitting Downlink Control Information (DCI) is provided, comprising: transmitting first DCI to a mobile terminal, the first DCI being a part of the DCI and comprising resource allocation information; and transmitting second DCI to the mobile terminal on a resource designated by the resource allocation information, the second DCI being another part of the DCI and different from the first DCI.

According to another aspect of the present invention, a method for receiving Downlink Control Information (DCI) is provided, comprising: receiving first DCI, which is a part of the DCI and comprises resource allocation information; processing the first DCI, and determining a resource used by a base station to transmit second DCI according to the resource allocation information; and receiving the second DCI on the determined resource.

According to another aspect of the present invention, a base station is provided, comprising: a first processing unit configured to process first Downlink Control Information (DCI), which is a part of the DCI and comprises resource allocation information; a second processing unit configured to process second DCI, which is another part of the DCI and different from the first DCI; a first transmitting unit configured to transmit the first DCI in a control region of a subframe transmitted to a mobile terminal; and a second transmitting unit configured to transmit the second DCI on a resource of the subframe designated by the resource allocation information.

According to another aspect of the present invention, a mobile terminal is provided, comprising: a first Downlink Control Information (DCI) receiving unit configured to receive first DCI, which is a part of the DCI and comprises resource allocation information; a first DCI processing unit configured to process the first DCI, so as to determine a resource for transmitting second DCI; a second DCI receiving unit configured to receive the second DCI from the determined resource; and a second DCI processing unit configured to process the second DCI

According to another aspect of the present invention, a logic part readable program is provided, which when being executed by a logic part of a base station, enables the base station to implement the method for transmitting Downlink Control Information (DCI) according to the present invention, or the base station according to the embodiment of the present invention.

According to another aspect of the present invention, a logic part readable program is provided, which when being executed by a logic part of a mobile terminal, enables the mobile terminal to implement the method for receiving Downlink Control Information (DCI) according to the embodiment of the present invention, or the mobile terminal according to the embodiment of the present invention.

The embodiment of the present invention further provides a tangible storage medium which stores the aforementioned logic part readable program.

### Brief Description of the Drawings

The above and other objectives, features and advantages of the present invention will be more clearly understood from the following descriptions of the embodiments of the present invention made with reference to the drawings. The parts in the drawings are not necessarily drafted in proportion, but just for illustrating the principle of the present invention. For the convenience of illustrating and describing some portions of the present invention, corresponding portions in the drawings may be enlarged, i.e., enlarged with respect to other parts in an exemplary apparatus practically manufactured according to the present invention. In the drawings, identical or corresponding technical features or parts may be denoted with identical or corresponding reference signs.
Fig. 1 illustrates a typical subframe structure of an LTE system.
Fig. 2 illustrates a schematic diagram of a processing procedure of a PDCCH transmitting end in the prior art.
Fig. 3 illustrates a typical deployment of a cell containing RRHs.
Fig. 4 schematically illustrates a method for transmitting DCI according to an embodiment of the present invention.
Fig. 5 illustrates a diagram of DCI distribution in a subframe according to an embodiment of the present invention.
Fig. 6 illustrates a schematic functional block diagram of a base station according to an embodiment of the present invention.
Fig. 7 illustrates a schematic diagram of a mobile phone used as an example of a mobile device according to an embodiment of the present invention.
Fig. 8 illustrates a schematic flowchart of a method for receiving DCI according to an embodiment of the present invention.
Fig. 9 illustrates a schematic flowchart of a method for receiving DCI according to an embodiment of the present invention.
Fig. 10 illustrates a schematic functional block diagram of a mobile terminal according to an embodiment of the present invention.

### Description of the Embodiments

The embodiments of the present invention will be described as follows with reference to the drawings. Elements and features described in a drawing or an embodiment of the present invention can be combined with elements and features illustrated in one or more other drawings or embodiments. To be noted, for the purpose of clearness, representations and descriptions of parts and processing unrelated to the present invention and known to a person skilled in the art are omitted in the drawings and the Description.

In the Description and the drawings, the specific embodiments of the present invention are disclosed in detail, and the ways in which the principle of the present invention can be adopted are designated. It shall be appreciated that the scope of the present invention is not limited thereto. The present invention includes many changes, amendments and equivalents within the scope of the spirit and clauses of the accompanied claims.

To be emphasized, the term "comprise/include/have" used herein specifies the presence of feature, element, step or component, not excluding the presence or addition of one or more other features, elements, steps or components.

Fig. 4 schematically illustrates a method for transmitting DCI according to an embodiment of the present invention.

As illustrated in Fig. 4, in the method for transmitting DCI according to an embodiment of the present invention, firstly in step S401, first DCI is transmitted to a mobile terminal; next in step S402, second DCI is transmitted to the mobile terminal on a resource designated by the first DCI. Before being transmitted, the first DCI and the second DCI respectively undergoes processing such as redundancy check code generation, coding, modulation, resource mapping, etc.

In the conventional technical solution, the DCI is carried on the PDCCH. The DCI may include the following contents:
1. Resource allocation information
2. Modulation coding information
3. Precoding information
4. HARQ information
5. Other control information

In which, the resource allocation information indicates the resource for transmitting downlink data on the PDSCH. If there are data to be transmitted on the Downlink Shared Channel (DL-SCH), corresponding downlink allocation information is transmitted on the PDCCH. After detecting and successfully demodulating the PDCCH transmitted thereto, the UE receives data in the data region of the subframe according to the configured PDSCH.

Various DCI listed in above items 2 to 5 is also known to a person skilled in the art, and herein is omitted.

In order to solve the problem that the system throughput is restricted due to the limited number of the OFDM symbols in the control region (at most three OFDM symbols), the present invention divides the DCI into first and second DCI, wherein the first DCI includes the resource allocation information. In some embodiments, the first DCI may additionally include a part of the information listed in the above items 2 to 5. The second DCI may include any other DCI except the information in the first DCI.

According to the embodiment of the present invention, the first DCI is transmitted in the control region, and the remaining DCI (the second DCI) is transmitted on the resource in the data region designated by the resource allocation information in the first DCI, thereby reducing the transmission volume in the control region, and thus improving the throughput of the communication system. The first DCI also designates the resources occupied by the control signaling and the data signal in the data region, so that the remaining DCI (the second DCI) and the data information can be obtained when the mobile terminal decodes the first DCI.

Since only the first DCI is transmitted in the control region, the length of the source bit of the PDCCH in the control region is largely reduced. For example, the length of the resource allocation information field is only 17 bits for a bandwidth of 10MHz. Thus in one embodiment, the CRC length for the first DCI is reduced from 16 bits to 8 bits.

In one embodiment, the CCE is still used as the minimum unit of the resource allocation for the PDCCH (the second DCI) in the data region, and 1, 2, 4 or 8 CCEs can be occupied. In that case, the first DCI comprises information indicating the number of the CCEs used for transmitting the second DCI. In one embodiment, the number of the CCEs used for the second DCI in the data region is indicated through 2 bits in the first DCI.

In one embodiment, the second DCI is allocated on the resource designated by the first DCI in a principle of frequency domain priority, which means that when the information is mapped on the time-frequency resource, firstly a certain OFDM symbol in the time domain is fixed, and then corresponding information symbols of the second DCI are mapped sequentially on the OFDM symbol in an ascending order of the frequencies. Thus, on the resource designated by the first DCI, the second DCI is distributed on first several OFDM symbols.

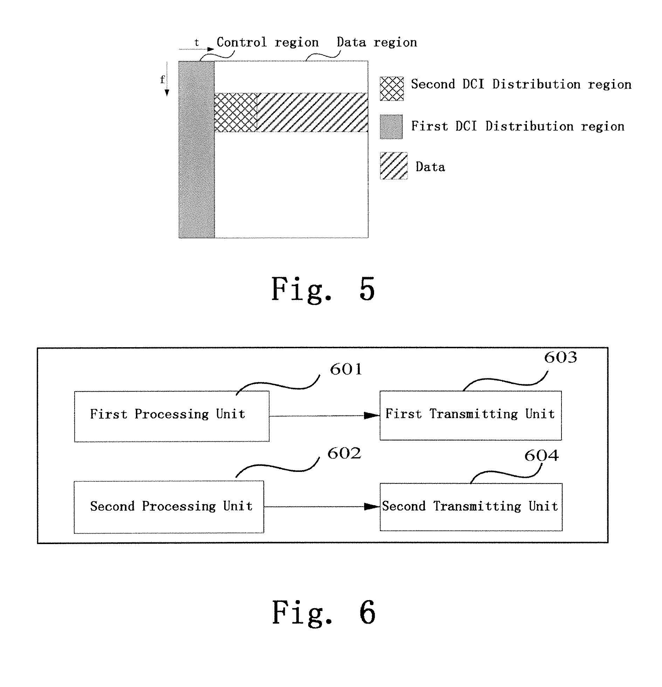

Fig. 5 illustrates a diagram of DCI distribution in a subframe according to an embodiment of the present invention. As illustrated in Fig. 5, in a subframe according to an embodiment of the present invention, the first DCI is distributed in the control region of the subframe. The second DCI is distributed on first several symbols on the resource designated by the first DCI. To be noted, according to the current provisions of related criterion, the control region occupies at most first three OFDM symbols in the subframe, but with the development of the criterion, the control region may occupy more symbols in the subframe.

In one embodiment, the second DCI is modulated using a modulation mode (e.g., QPSK modulation) appointed with the mobile terminal.

In another embodiment, the second DCI can also adaptively adjust the modulation mode according to the current channel state, e.g., using the QPSK modulation or a modulation mode having higher order than the QPSK modulation, such as 16QAM modulation. In that case, the first DCI further comprises the modulation information.

In one embodiment, the second DCI is coded using an appointed coding mode (e.g., convolutional coding). In an alternative embodiment, the second DCI may be coded using a coding mode not appointed. In that case, the first DCI further comprises the modulation information of the second DCI.

In one embodiment, when a transmitting mode of closed-loop MIMO is adopted, the PDCCH (the second DCI) of the data region uses a fixed transmitting mode with rank=1. In that case, the rank of the antenna used for transmitting the second DCI may be different from that of the antenna used for transmitting the data in the data region, and the precoding matrix used for transmitting the second DCI may also be different from that used for transmitting the data in the data region.

According to another embodiment, the second DCI may be transmitted by using a rank and a precoding matrix the same as those used for transmitting the data. When the transmitting mode returns from the closed-loop MIMO to the transmit diversity, the second DCI may also be transmitted by using the transmitting mode of the transmit diversity.

According to the embodiment of the present invention, the second DCI is transmitted on the resource designated by the first DCI. Since the resource designated by the first DCI is determined according to various factors (e.g., channel state information (CSI) fed back by the mobile station for a certain segment of resource, such as channel quality information (CQI), precoding information (PMI), rank information (RI), etc.), the second DCI may be transmitted on the relatively better resource, thereby the system flexibility and performance can be improved.

Fig. 6 illustrates a schematic functional block diagram of a base station according to an embodiment of the present invention. As illustrated in Fig. 6, the base station according to an embodiment of the present invention comprises: a first processing unit 601 configured to process first DCI, including acquiring a CRC code of the first DCI, performing coding and modulation, resource mapping, etc., wherein the first DCI comprises resource allocation information; a second processing unit 602 configured to process second DCI, including acquiring a CRC code of the second DCI, performing coding and modulation, resource mapping, etc., wherein the second DCI comprises the DCI except the first DCI; a first transmitting unit 603 configured to transmit the first DCI in a control region of a subframe transmitted to a mobile terminal; and a second transmitting unit 604 configured to transmit the second DCI on a resource of the subframe designated by the resource allocation information.

According to an embodiment, the first processing unit 601 acquires a CRC code of 8 bits from the first DCI.

In one embodiment, the second processing unit 602 maps the second DCI by using a CCE as the minimum unit of resource allocation, and the number of the CCEs occupied by the second DCI is 1, 2, 4 or 8. In that case, the first DCI comprises information indicating the number of the CCEs used for transmitting the second DCI. In one embodiment, the first DCI indicates the number of the CCEs used for the second DCI in the data region through 2 bits.

In one embodiment, the second processing unit 602 maps the second DCI into a region of the first several symbols on the resource designated by the first DCI.

In one embodiment, the second processing unit 602 encodes the second DCI by using a coding mode (e.g., convolutional coding) appointed with the receiving end. The second processing unit 602 may also encode the second DCI in a coding mode not appointed with the receiving end. In that case, the first DCI further comprises information on the modulation mode of the second DCI.

In one embodiment, second processing unit 602 modulates the second DCI in a modulation mode (e.g., QPSK modulation) appointed with the receiving end.

In another embodiment, the second processing unit 602 modulates the second DCI by using a modulation mode not appointed (e.g., a modulation mode having higher order than the QPSK modulation, such as 16QAM modulation). In that case, the first DCI further comprises information on the modulation mode of the second DCI.

In one embodiment, the second transmitting unit 604 transmits the second DCI by using a transmitting mode with rank=1.

According to another embodiment, the second transmitting unit 604 may transmit the second DCI by using a rank and a precoding matrix the same as those used for transmitting the data. When the transmitting mode returns from the closed-loop MIMO to the transmit diversity, the second DCI may also be transmitted by using the transmitting mode of the transmit diversity.

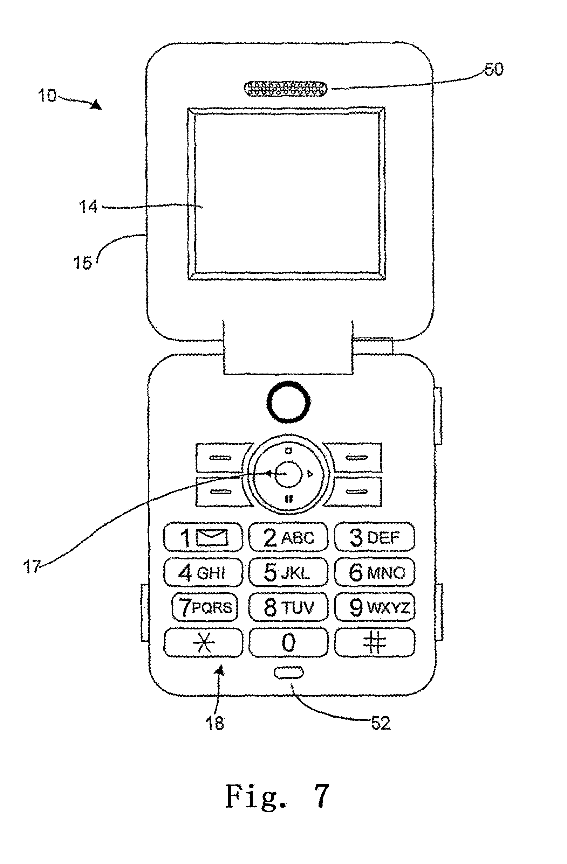

Fig. 7 illustrates a schematic diagram of a mobile phone used as an example of a mobile device (user terminal) according to an embodiment of the present invention. To be noted, the mobile terminal or the user terminal capable of applying the embodiments of the present invention is not limited to the mobile phone, and the embodiments of the present invention can also be applied to a PDA, a portable computer, a gaming machine, etc. which have a communication capability. As illustrated in Fig. 7, a mobile phone 10 may be a flip phone having a cover 15 movable between an open position and a closed position. In Fig. 7, the cover 15 is illustrated as being located at the open position. It shall be appreciated that the mobile phone 10 may be other structure such as a "bar phone" or a "slide phone".

The mobile phone 10 may include a display 14 that displays information such as operating state, time, telephone number, telephone directory, menus, etc. to the user, so that the user can utilize various features of the mobile phone 10. The display 14 may be further configured to visually display the content received by the mobile phone 10 and/or retrieved from a memory (not shown) of the mobile phone 10. The display 14 may be configured to present images, videos and other graphics (e.g., photos, mobile TV programs and game-related videos) to the user.

A keypad 18 provides multiple user input operations. For example, the keypad 18 may include alphanumeric keys that allow alphanumerical information (e.g., telephone number, telephone list, telephone directory, notepad, text, etc.) to be input. In addition, the keypad 18 may include specific function keys 17, such as a "call send" key for initiating or answering a phone call, and a "call end" key for ending or hanging up the phone call. The specific function keys may further include a menu navigation key and a selection key which conveniently perform navigation through menus displayed on the display 14. For example, a pointing device and/or a navigation key may be provided to receive a directional input from the user. In addition, the display 14 and the keypad 18 may be used in combination to realize the soft key function. The mobile phone 10 further includes parts essential for realizing its functions, such as an antenna, a microcontroller, a speaker 50 and a microphone 52, etc.

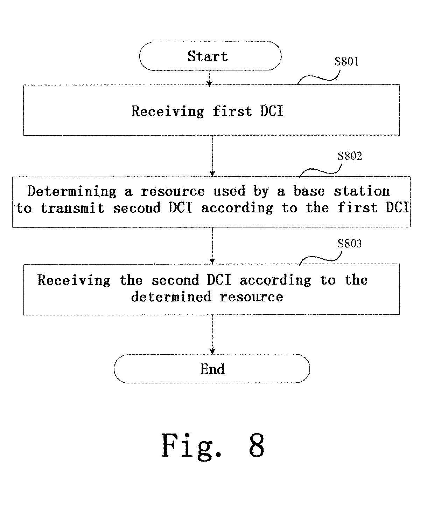

Fig. 8 illustrates a schematic flowchart of a method for receiving DCI according to an embodiment of the present invention.

As illustrated in Fig. 8, firstly in step S801, first DCI is received. For example, the first DCI may be received in a control region of a subframe, wherein the first DCI comprises resource allocation information. Next in step S802, a resource used by a base station to transmit second DCI is determined according to the resource allocation information. Next in step S803, the second DCI is received on the determined resource.

In one embodiment, the first DCI has a CRC code of 8 bits. In step S802, the first DCI is decoded based on the CRC code of 8 bits, so as to determine the resource used by the base station to transmit the second DCI.

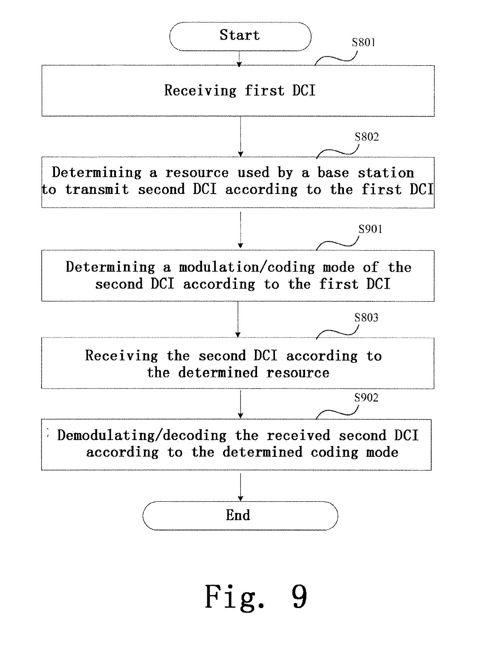

Fig. 9 illustrates a schematic flowchart of a method for receiving DCI according to an embodiment of the present invention. According to an embodiment, the first DCI further comprises modulation mode information/coding mode information of the second DCI. The method further comprises a step (S901) of determining a modulation mode of the second DCI according to the first DCI, and a step (S902) of decoding/demodulating the second DCI according to the determined modulation mode/coding mode.

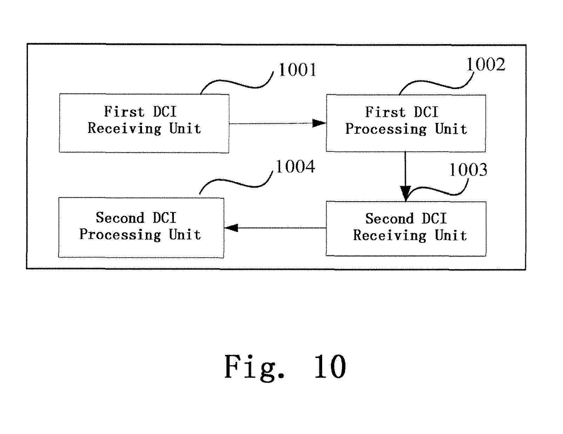

Fig. 10 illustrates a schematic functional block diagram of a mobile terminal according to an embodiment of the present invention.

As illustrated in Fig. 10, a mobile terminal according to an embodiment of the present invention includes: a first DCI receiving unit 1001 configured to receive first DCI, e.g., receiving the first DCI from a control region of a subframe transmitted from a base station, wherein the first DCI comprises resource allocation information; a first DCI processing unit 1002 configured to process the first DCI, so as to determine a resource of the subframe for transmitting second DCI; a second DCI receiving unit 1003 configured to receive the second DCI from the determined resource; and a second DCI processing unit 1004 configured to process the second DCI.

In one embodiment, the first DCI further comprises modulation information/coding information of the second DCI. The second DCI processing unit demodulates/decodes the second DCI according to the modulation information/coding information. In another embodiment, the modulation mode of the second DCI is appointed by the transmitting end (e.g., base station) and the receiving end (e.g., receiver). In that case, the transmitting end does not need to transmit the modulation information/decoding information of the second DCI to the receiving end.

Among the descriptions of the embodiments of the present invention, the descriptions of the methods and steps may be taken to help the understanding of the devices and units, and the descriptions of the devices and units may be taken to help the understanding of the method and steps. The descriptions of the processing by the receiving end may be taken to help the understanding of the processing by the transmitting end, and the descriptions of the processing by the transmitting end may be taken to help the understanding of the processing by the receiving end.

The above devices, units, methods and steps of the present invention may be implemented by hardware, or a combination of hardware and software. The present invention relates to a logic part readable program which when being executed by a logic part, enables the logic part to implement the aforementioned device or constituent parts, or enables the logic part to implement the aforementioned methods or steps. The logic part for example may be a field programmable logic part, a microprocessor, a processor used in the computer, etc. The present invention further relates to a storage medium for storing the above program, such as hard disc, magnetic disc, optical disc, DVD, flash, magnetic optical disc, memory card, memory stick, etc

Herein, features described and/or illustrated with respect to one embodiment can be used in one or more other embodiments in a same or similar way, and/or used by being combined with or replacing the features of other embodiments.

The present invention is described as above in conjunction with specific embodiments. But a person skilled in the art shall appreciate that those descriptions are just exemplary, rather than limitations to the protection scope of the present invention. A person skilled in the art can make various modifications and changes to the present invention based on the spirit and the principle of the present invention, and those modifications and changes also fall within the scope of the present invention.

## Claims

1. A method for transmitting downlink control information, comprising:
transmitting first downlink control information to a mobile terminal, the first downlink control information being a part of the downlink control information and comprising resource allocation information; and
transmitting second downlink control information to the mobile terminal on a resource designated by the resource allocation information, the second downlink control information being another part of the downlink control information and different from the first downlink control information.

2. The method for transmitting downlink control information according to claim 1, wherein the first downlink control information is transmitted in a control region of a subframe transmitted to the mobile terminal, and the resource designated by the resource allocation information is a resource in a data region of the subframe.

3. The method for transmitting downlink control information according to claim 1, wherein the first downlink control information has a cyclic redundancy check code with a length of 8 bits.

4. The method for transmitting downlink control information according to claim 1, wherein the second downlink control information is transmitted by using a control channel element as the minimum unit of resource allocation, and the number of the control channel elements is 1, 2, 4 or 8.

5. The method for transmitting downlink control information according to claim 2, wherein on the resource designated by the resource allocation information, the second downlink control information is distributed on several anterior symbols and mapped in a manner of frequency domain priority.

6. The method for transmitting downlink control information according to claim 1, wherein the first downlink control information further comprises coding mode information and/or modulation mode information of the second downlink control information.

7. The method for transmitting downlink control information according to claim 1, wherein the second downlink control information is transmitted by using control channel elements, and the first downlink control information comprises information indicating the number of the control channel elements used for transmitting the second downlink control information.

8. The method for transmitting downlink control information according to claim 2, wherein a rank of an antenna used for transmitting the second downlink control information is fixed as 1, or the same as that of an antenna used for transmitting data in the data region.

9. The method for transmitting downlink control information according to claim 1, wherein the second downlink control information is transmitted in a transmit diversity mode.

10. A method for receiving downlink control information, comprising:
receiving first downlink control information, which is a part of the downlink control information and comprises resource allocation information;
processing the first downlink control information, and determining a resource used by a base station to transmit second downlink control information according to the resource allocation information; and
receiving the second downlink control information on the determined resource.

11. The method for receiving downlink control information according to claim 10, wherein the first downlink control information is received in a control region of a subframe.

12. The method for receiving downlink control information according to claim 10, wherein the first downlink control information further comprises coding mode information and/or modulation mode information of the second downlink control information,
the method further comprising:
decoding/demodulating the second downlink control information according to the coding mode information and/or modulation mode information.

13. A base station, comprising:
a first processing unit configured to process first downlink control information, which is a part of the downlink control information and comprises resource allocation information;
a second processing unit configured to process second downlink control information, which is another part of the downlink control information and different from the first downlink control information;
a first transmitting unit configured to transmit the first downlink control information in a control region of a subframe transmitted to a mobile terminal; and
a second transmitting unit configured to transmit the second downlink control information on a resource of the subframe designated by the resource allocation information.

14. The base station according to claim 13, wherein the first processing unit acquires a cyclic redundancy check code of 8 bits from the first downlink control information.

15. The base station according to claim 13, wherein the second processing unit uses a control channel element as minimum unit of resource allocation to map the second downlink control information, and the number of the control channel elements occupied by the second downlink control information is 1, 2, 4 or 8.

16. The base station according to claim 13, wherein the second processing unit maps the second downlink control information into a region of several anterior symbols on the resource designated by the resource allocation information.

17. The base station according to claim 11, wherein the first downlink control information further comprises modulation information and/or coding information of the second downlink control information.

18. A mobile terminal, comprising:
a first downlink control information receiving unit configured to receive first downlink control information, which is a part of the downlink control information and comprises resource allocation information;
a first downlink control information processing unit configured to process the first downlink control information, so as to determine a resource for transmitting second downlink control information;
a second downlink control information receiving unit configured to receive the second downlink control information from the determined resource; and
a second downlink control information processing unit configured to process the second downlink control information.

19. A logic part readable program, which when being executed by a logic part of a base station, enables the base station to implement the method according to any of claims 1 to 7, or the base station according to any of claims 11 to 15.

20. A logic part readable program, which when being executed by a logic part of a mobile terminal, enables the mobile terminal to implement the method according to any of claims 8 to 10, or the mobile terminal according to claim 16.

21. A tangible storage medium which stores the logic part readable program according to claim 19 or 20.
